# EUROPEAN PATENT SPECIFICATION

(11) **EP 1 575 384 B1**
(45) Date of publication and mention of the grant of the patent: **15.06.2011**
(21) Application number: 03781249.2
(22) Date of filing: 19.12.2003
(51) Int. Cl.: A24B 13/00, A24B 15/18

(54) **A NON-CHEWABLE TOBACCO COMPOSITION**
NICHTKAUBARE TABAKZUSAMMENSETZUNG
COMPOSITION À BASE DE TABAC NON-MASTIQUABLE

(30) Priority: 19.12.2002 SE 0203775; 19.12.2002 US 322440
(43) Date of publication of application: 21.09.2005
(73) Proprietor: Swedish Match North Europe AB, 118 85 Stockholm (SE)
(72) Inventor: HODIN, Fredrik, 144 64 RÖNNINGE (SE); LUNDIN, Jörgen, 194 33 UPPLANDS-VÄSBY (SE); ARNARP, Jan, 118 28 STOCKHOLM (SE)
(74) Representative: Nikolopoulou, Sofia
(86) International application number: PCT/SE2003/002032
(87) International publication number: WO 2004/056219

(56) References cited:
- WO-A1-81/02090
- US-A- 4 606 357

## Description

This invention concerns the technical field of tobacco-containing products, especially tobacco-containing products, which give a high yield of taste and nicotine without chewing and, which gives a pleasant appearance. In particular, a tobacco containing composition and a method for its manufacture are disclosed.

### Background

There are gum-containing tobacco products previously known. In US 4802498, US 5092352 and US 5845647 there are chewable gum-containing tobacco products disclosed. The chewable gum-containing tobacco product of US 5092352 further contains of a blend of particulate tobacco in a chewing gum base present in the amount of 20 - 75 %, of the product together with a glycerine humectant in the amount of 2 - 12 % of the product and sweetening and flavoring agents. In US 4545392 there is also a gum-containing tobacco product disclosed which is chewable.

A tobacco tablet is also disclosed in US 1376586 wherein the tobacco tablet, containing tobacco, is covered on its surfaces with a cohesive gummy substance.

A tobacco cartridge is further disclosed in US 1234279 wherein chewing tobacco is enclosed in casings which are non-disintegrating when subjected to moisture, permitting the juice to pass out and solid particles to be retained.

The appearance of products presently on the market can still however be improved. Further, the nicotine release of previously known tobacco-containing gum products is low if not chewed and it can accordingly be improved. Normally tobacco bound with gum gives rise to slow diffusion and the nicotine transportation to the surface becomes slower. This is normally compensated by the chewing of such previously known tobacco containing gum-compositions. Further, they also present a different appearance which is less pleasant after use in the oral cavity. Tobacco-containing gum products for use in the mouth (oral use) presently on the market thus need to be chewed in order to give a reasonable high yield of taste and nicotine. This means also that they do not provide a pleasant appearance of the user of the previously known tobacco-containing gum products, i.e. the products need to be chewed and ruminated in the mouth over and over again which may be disturbing both for the user and for the people getting in contact with said user. Also the previously known tobacco-containing gum products may produce after their use products which are not very pleasant to look at.

Accordingly there is a need for tobacco products, which give a high yield of taste and nicotine without chewing, which offer a good appearance both before and after use of said product and which also provides an even taste during use of said products.

### Summary of the invention

The present invention solves one or more of the above problems by providing according to a first aspect of the invention a non-chewable tobacco composition according to claim 1, for use in the oral cavity, between the lip/cheek and gums, comprising tobacco and a carrier and wherein the composition is easily formable whereby it adjusts its form during use in the oral cavity, is easily colorable during manufacturing, retains essentially its original form and color after use in the oral cavity and has a relatively high nicotine release comparable with a portion pack of oral moist snuff. The tobacco compostion is preferably positioned under the upper lip during use in the oral cavity, in order to avoid excessive saliva production which in turn may lead to nicotine loss in the form of spitting and swallowing (gulping down). The tobacco composition according to the first aspect of the present application is thus accordingly more similar to moist snuff in portion packages, than previously known tobacco containing gum-compositions. Also provided, according to a second aspect of the present invention, is a method for the manufacturing of a tobacco composition according to the first aspect of the present invention comprising the following steps:
a) mixing tobacco, a buffering agent for the regulation of the pH in order to facilitate the nicotine uptake and optionally a whitening agent;
b) adding a humectant and, optionally, a solvent, and mixing with the mixture in step a) ;
c) adding the mixture obtained in b) to a preheated gum base;
d) mixing the dough thoroughly in warm conditions; and, optionally,
e) punching out the tobacco composition in a desired form.

### Detailed description of the invention

It is intended throughout the present description that the expression "tobacco product"or "tobacco composition" (used interchangeably in the present description) embrace any composition or product comprising tobacco in any form.

It is intended throughout the present description that the expression "tobacco raw material " or "tobacco" (used interchangeably in the present description) embrace any tobacco type available or mixtures thereof. Examples of tobacco types are: Rustica, Virginia, Burley, Oriental and Kentucky. Preferably the tobacco is tobacco in powder form. The tobacco powder is preferably obtained by breaking up, drying and feeding raw tobacco into a grinder (or a cutter). The ground (or cut) tobacco is then sieved into three particle size fractions: coarse, medium and fine. Pre-set quantities of the three fractions may be fed into a mixer silo where the tobacco flour is mixed. After blending, the tobacco flour is fed into a storage silo, from which flour may automatically be taken for processing into a tobacco product. Each type of tobacco flour is preferably kept in a separate silo. The tobacco may also be flue cured, air cured, sun cured or fire cured. Preferably said tobacco is ground/cut raw tobacco, tobacco powder or moist snuff, or any combination thereof.

It is intended throughout the present description that the expression "carrier" embraces any carrier suitable for use in a non-chewable tobacco composition as set out above. The carrier according to the invention is a gum base, preferably a bubble gum base or a chewing gum base or a mixture thereof, most preferred a chewing gum base. An example of a chewing gum base is Smily 2 toco Pellets obtainable from Gum Base Company S. p. A., Italy.

It is intended throughout the present description that the expression "solid carrier" embraces any solid carrier suitable for carrying the tobacco composition according to the present invention, preferably said solid carrier is a strip of cloth, most preferred a cloth comprising heat-sealable non-woven.

According to a preferred embodiment of the first aspect of the present invention the tobacco composition according to the present invention comprises additionally a solvent, wherein said solvent preferably water or ethanol, or a combination thereof. Most preferred water is used.

According to the first aspect of the present invention the carrier is a gum base, preferably bubble gum base or a chewing gum base or a mixture thereof, most preferred a chewing gum base.An example of a chewing gum base is Smily 2 toco Pellets obtainable from Gum Base Company S. p. A., Italy.

According to a preferred embodiment of the first aspect of the present invention the nicotine release during 30 minutes is at least approximately 10 % of the nicotine content.

According to a preferred embodiment of the first aspect of the present invention the nicotine release is controlled by varying the thickness of said composition from about 0.5 to about 8 mm, preferably form about 1 to about 4 mm, most preferred from about 1.5 to about 3 mm, and/or by imprinting a pattern. By doing so it is possible to provide a relatively short distance for the release of nicotine molecules from the tobacco in said composition and/or provide a high surface area on said composition. The composition according to the present invention may e.g. be processed in a pasta machine for obtaining a suitable thickness, whereby it is possible to press the composition into a thin plate. In order to make a pattern on said composition a plaited mesh may be applied (e.g. 2 x 2 mm, with 0.7 mm thread thickness (diameter) which creates a pattern with a depth of 0.7 mm). Obviously it is also possible to make a pattern on either or on both sides of said composition.

According to a preferred embodiment of the first aspect of the present invention the nicotine uptake is enhanced by keeping the pH in said composition above about 6.5, preferably above pH 7.5. The pH in said tobacco composition may preferably be adjusted (and thus regulated) by the use of a buffering agent selected from the group consisting of salts of carbonates and salts of phosphates or mixtures thereof, preferably Na₂CO₃ and Na₃PO₄ or mixtures thereof, most preferred said agent is Na₂CO₃. Accordingly said tobacco composition may comprise said one or more of said buffering agents.

According to a preferred embodiment of the first aspect of the present invention the tobacco composition according to the present invention comprises additionally a whitening agent, preferably a whitening agent selected from the group consisting of TiO₂ and CaCO₃ or mixtures thereof, most preferred TiO₂. Fillers (texturizers) may also be added and be selected from the group comprising the following compounds: zinc oxide, alumina, alumiminium hydroxide, alumiminium oxide and magnesium silicate or combinations thereof.

According to the first aspect of the present invention the tobacco composition according to the present invention comprises tobacco from 10 to 60% (w/w), chewing gum base from 20 to 60% (w/w) and a whitening agent from 0 to 60 % (w/w). The content of whitening agent may further be from 0.1 to 60 % (w/w). The tobacco composition according to the invention thus comprises tobacco in a relatively high amount, a gum base and also a buffering agent capable enhancing the nicotine uptake.

According to a preferred embodiment of the first aspect of the present invention the pH in said composition is adjusted by the use of a buffering agent selected from the group consisting of salts of carbonates and salts of phosphates or mixtures thereof, preferably Na₂CO₃ and Na₃PO₄ or mixtures thereof, most preferred said agent is Na₂CO₃.

According to a preferred embodiment of the first aspect of the present invention the tobacco composition according to the present invention comprises additionally a humectant, preferably glycerol or propylene glycol or mixtures thereof, most preferred glycerol.

According to a preferred embodiment of the first aspect of the present invention the tobacco composition according to the present invention comprises additionally a plasticizer and/or a lipophilic softener. The plasticizer may be hydrophilic or hydrophobic (i.e. lipophilic). Examples of hydrophilic plasticizers are glycerol, propylene glycol and polyethylene glycol and combinations thereof. Preferably glycerol is used as plasticizer. Examples of hydrophobic plasticizers (softeners) are lecithin, cephalin, Tweens, Spans, glyceryl monostearate and beeswax or combinations thereof. Fats may also be used as hydrophobic plasticizers.

According to a preferred embodiment of the first aspect of the present invention the tobacco composition according to the present invention comprises additionally colors or flavors, e.g. mint, or combinations thereof. Colors may be added so that the color of the tobacco composition may be any which is suitable as food additive, i.e. food colorants. The color may e.g. range from light beige to black. It may also be green.

According to a preferred embodiment of the second aspect of the present invention, i.e. the method according to the present invention, one or more sweeteners, colors, flavors, plasticizers or softener are added in step a) and or in step b).

According to a preferred embodiment of the second aspect of the present invention, said composition is pressed and folded repeatedly after step d), preferably more than 30 times to form an (internally) multi-layered tobacco composition. The composition may be processed in a press, preferably in a roller press such as a pasta machine. The composition may be rolled, sprinkled with a lubricant, preferably cornstarch or similar, and folded. Then again the load layer is pressed again. This may preferably be repeated for at least 30 times, to a thinner and thinner composition. The end thickness may be from about 0.5 mm to about 8 mm. The lubricant may be potato flour, talc or cornstarch, preferably cornstarch.

According to a preferred embodiment of the second aspect of the present invention a lubricant is distributed on the tobacco composition before each folding, preferably the tobacco composition is sprinkled with cornstarch before each folding.

According to a preferred embodiment of the second aspect of the present invention the tobacco composition is coated with a coating layer or is patterned.

According to a preferred embodiment of the second aspect of the present invention the tobacco composition is subsequently in step e) punched out in pieces for oral use, preferably in a form suitable for having said composition in the oral cavity between lip/cheek and gums, most preferred essentially elliptic pieces. Also essentially circular pieces are plausible. The pieces are further preferably in size for use in the mouth, most preferred under the upper lip of a human being. If the pieces are essentially circular, which preferably are used in the embodiment wherein said composition is used in connection with a solid carrier as set out below, they may preferably have a diameter of approximately 7 mm. If an elliptic form is desirable, wherein preferably no solid carrier is used, the tobacco composition may e.g. have a thickness of about 4 mm, and a breadth of about 12 mm and a length of about 18 to about 24 mm.

According to a preferred embodiment of the second aspect of the present invention the out-punched tobacco composition is put on a solid carrier, preferably a strip of cloth, most preferred a cloth comprising heat-sealable non-woven, and optionally subsequently the cloth is sealed, preferably using heat. The tobacco composition may also be coated with a coating layer which also may be patterned or give rise to a pattern on the tobacco composition. A method of achieving a patterning effect on the tobacco composition surface and therefore a further preferred embodiment of the invention, comprises continuously printing the tobacco composition with a coating substance, leaving gaps on the tobacco composition that may correspond to marks, logotypes, texts or anagrams, thereby for printing of the tobacco composition. A coloring agent may further penetrate through the outer layer of the tobacco composition at such open points and not on the remaining surface that would be protected by the coating substance. Printing may thus be based upon applying the coating substance as a printed background, leaving the foreground or printed characters without this coating substance, and hence when the tobacco composition with the layers inside undergoes coloring operations, it will only be penetrated through areas without the coating substance, leaving the surface of such tobacco composition marked by the areas without coating substance.

According to a preferred embodiment of the second aspect of the present invention a further solid carrier, preferably a strip of cloth, most preferred a cloth comprising heat-sealable non-woven, is added on the other opposite side of the out-punched tobacco composition, and optionally subsequently the solid carriers are sealed together, preferably using heat. Additionally a further solid carrier, preferably a strip of cloth, most preferred a cloth comprising heat-sealable non-woven, is added on the other opposite side of the out-punched tobacco composition, thus forming a sandwich with the tobacco composition in the middle, and optionally subsequently the two carriers are sealed together, preferably using heat. The sealing may create a seal around each tobacco composition. The pieces (i.e. the tobacco composition) with a diameter of approximately 7 mm may e.g. be put between two strips of heat-sealable non-woven which may have a width of approximately 12 mm and be sealed.

According to a preferred embodiment of the second aspect of the present invention a tobacco composition obtainable by the method according to the second aspect of the present invention is provided.

The tobacco composition according to the first and the second aspect of the present invention may be presented in a container which e.g. may be used for normal moist snuff ("snus"), comprising one or more tobacco compositions according to the invention. Said container may accordingly be a can which in turn may be provided with a lid. The tobacco product may also be presented in other forms.

The present tobacco composition according to the present invention is constructed to function without chewing. The construction (the tobacco composition) will essentially be destroyed and the product will break up in pieces if it is chewed. The preferred use is under the upper lip of a human being. The product is essentially not soluble, mainly nicotine and taste are extracted from the invention when used in the mouth. In a non-chewing product nicotine release depends on the amount of nicotine and on the size of the surface exposed to saliva. In the present invention steps are taken to expand the surface. To improve the appearance, "the stay in place performance" or the initial taste the tobacco composition according to the present invention may contain on its surfaces other mixtures, components or material compared to the inner ones.

Further advantages with the tobacco composition according to the present invention are e.g. that there is less flow of tobacco particles from the upper lip which trickle down during use. As the pH is retained at a relatively high level there will be less damages on the mucous membrane. Also the minimal amount of particles will also minimize eroding damages in the mouth. Further the tobacco composition according to the present invention allows for the drinking of beverages, e.g. coffee, simultaneously during the use of said tobacco product. Additionally the tobacco composition is discreet and not conspicuous during use in the oral cavity. There is also a higher water uptake in the composition according to the present invention (the weight of which may increase with 35 % due to water uptake) which enables an-easier movement of the nicotine molecules. This high uptake is essentially due to the relatively high amount of tobacco present in said composition. The nicotine-release of the tobacco composition according to the present is accordingly enhanced through one or more of the below appearing ways:
i) The composition has an essentially optimized format with relatively large construction surfaces against the mucous membrane and a thickness of from about 0.5 to 8 mm, preferably 1 to about 4 mm, most preferred only 2-3 mm thickness in order to minimize the distance which the nicotine has to be transported within the product;
ii) It is patterned in order to increase the nicotine releasing surface;
iii) It is soft in order to enhance the contact between the composition and the mucous membranes;
iv) It contains a relatively high amount of tobacco which also leads to that it will not stick together if chewed; and
v) It is preferably positioned under the upper lip in order to avoid excess saliva secretion, which in turn leads to nicotine losses in the form of spitting and swallowing.

Preferred features of each aspect of the invention are as for each of the other aspects mutatis mutandis. The invention is further described in the following examples, in connection with the appended figures, which do not limit the scope of the invention in any way. Embodiments of the present invention are described in more detail with the aid of examples of embodiments, the only purpose of which is to illustrate the invention and are in no way intended to limit its extent.

### Figures

Figure 1 describes a laboratory mouth for use in determining nicotine uptake.
Figure 2 describes a laboratory set of components for use in determining nicotine uptake.
Figure 3 shows a diagram whereby different nicotine containing compositions have been compared.
Figure 4 shows a photo containing, from the left, chewing tobacco, moist snuff in a portion package and a tobacco composition according to the present invention. The above appearing items are the above products before use in the oral cavity, and the below appearing products are after use in the oral cavity.

### Examples

### Example 1

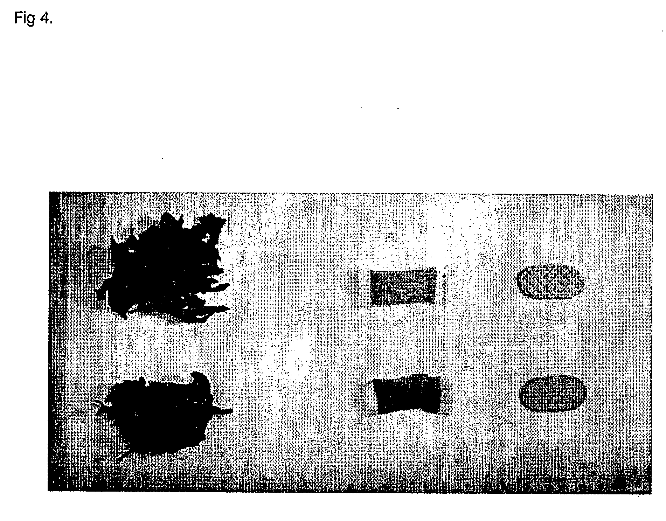

This example discloses a product preferably for use under the upper lip. It was made in an elliptic form (see figure 4).

The composition according to the present invention that was used in the above experiment, was made from the following components:

First dry components were mixed:

| | |
|---|---|
| 24% | titanium dioxide, |
| 30% | tobacco powder (preferably tobacco meal); |
| 0.7 % | sweetening agent (Sucketter®, which had been grinded into a powder by using a mortar and a pestle), and |
| 2 % | Na₂CO₃ |

Then, the gum base 30 % was heated (approximately to about 70 °C) and flavour 3 % was added to said base (Apotekets pepparmyntolja). The gum base was chewing gum base (Smily 2 toco Pellets from Gum Base Company S. p. A., Italy).
The mixed dry matter appearing above was added to the gum base with flavor and further also

| | |
|---|---|
| 6 % | glycerol, and |
| 5 % | water, was added to this mix. All wet components were stirred in. |

This mixture was then mixed to a smooth dough by kneading the "dough" in warm condition. The dough was subsequently processed in a pasta machine whereby pressing the dough into a thin plate (Atlas, manufactured by Marcato) and then the plaited mesh was applied (2x2 mm, 0.7 mm thread thickness (diameter)), thus forming a pattern on the dough plate. A pattern with a depth of 0.7 mm was thus created. Finally elliptical "lozenges" were punched out of the plate (see Figure 4).

If a high amount of TiO₂ is used the product may becomes stiffer which might be desirable in certain cases. It will then also become even more easily colorable. It will however not be as formable in the mouth as compared with a less amount of TiO₂.

### Nicotine release experiment

This experiment was done to measure the nicotine release (amount and speed) from the tobacco composition according to the present invention and show that the release is comparable with that from a portion-packed moist snuff, when used in the same way. The experiment was also done to prove that tobacco/nicotine chewing gum does not give the same release when used as portion-packed moist snuff. The release is calculated as the percentage of the initial nicotine content in the product. To compare different oral tobacco products an equipment, which imitates human oral snuffing and measures nicotine release on-line, has been developed.

### Description of the measuring equipment

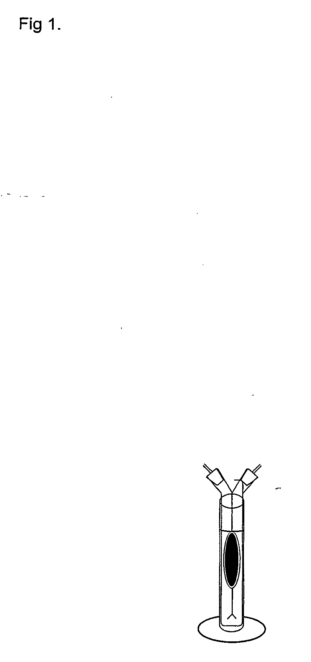

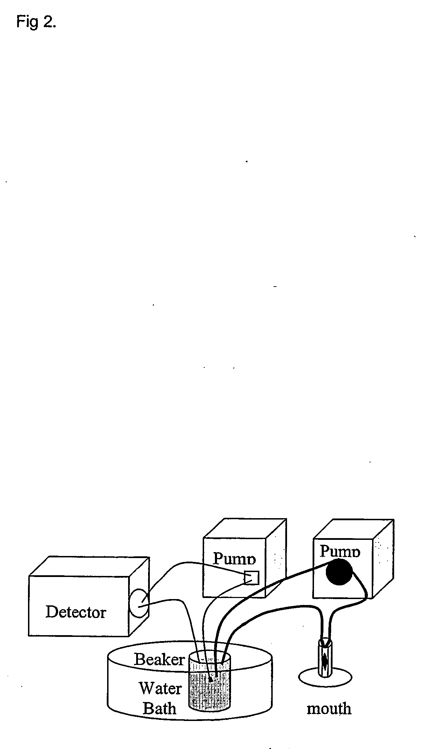

The product is placed in a synthetic mouth consisting of a 15 cm long tubing of regenerated Cellulose dialysis membrane (SPECTRUM, Spectra/Por®6, 1 000 MWCO), which is folded in two and a short measuring cylinder containing 2 ml of phosphate buffer (pH≈6.7). The product is placed between the folded membrane tubing, which is placed in the measuring cylinder. The synthetic mouth is shown in Figure 1. The mouth is connected to a peristaltic pump, recycling 100 ml of phosphate buffer inside the membrane tube to a beaker with the speed of 30 ml/min (Figure 2). Connected to the same beaker is another pump system consisting of a liquid chromatography pump and a diode array detector. A water bath keeps the temperature in the system at about 37 °C. During analysis only small molecules as nicotine penetrate the membrane and are transported to the detector. The measuring cycle is 30 minutes. Absorbance is measured simultaneously at 244.4, 259.4 and 274.4 nm with 0.32 seconds interval. The nicotine absorbent curve is calculated as: A_{nicotine} = A_{259.4} - (A_{274.4} + A_{244.4})/2. The measuring equipment is shown in Figure 2.

### Nicotine measurements

Four different products were analyzed - a portion-packed moist snuff containing 4 mg of nicotine, a tobacco chewing gum containing 1mg of nicotine, a nicotine chewing gum containing 2 mg of nicotine and the tobacco composition according to the present invention containing 4.2 mg of nicotine. The tobacco composition according to the present invention used in the measurement experiment above is depicted in figure 4 (third form the left) and as can be seen in Figure 4 there is a pattern which facilitates the nicotine uptake of a subject. Obviously it is also possible to have several internal layers as set out above earlier which would facilitate the uptake further by providing micro layers within the pattern, and accordingly a larger surface area. Further the above composition according to the present invention retained essentially its original form after the measurement experiment (which also can be seen in Figure 4). Additionally, there is less flow of tobacco particles from the upper lip which trickle down during use. None of the chewing gums were coated.

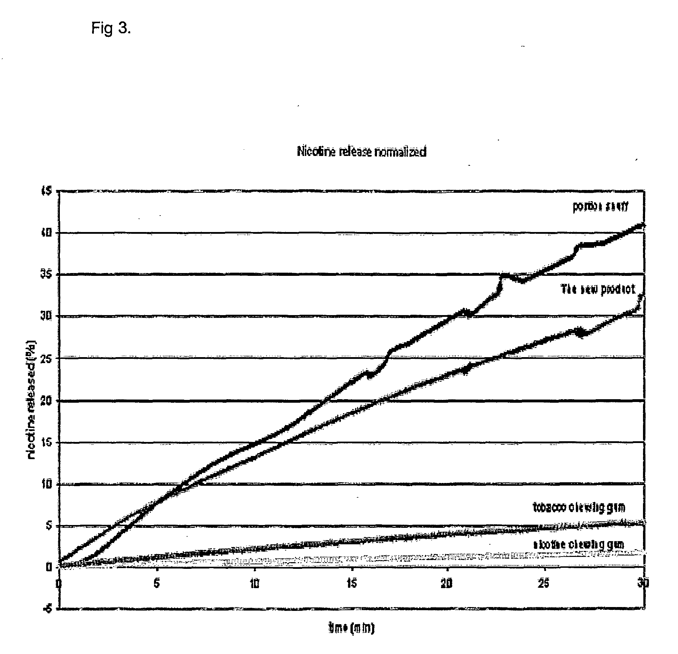

Figure 3 shows the results of the analyses. The curves are expressed as released nicotine in percentage of total amount of nicotine in the product. The curve below is nicotine chewing gum, the one further above represents tobacco chewing gum, the third from the bottom is the tobacco composition according to the present invention and the curve on the top represents moist snuff. As can be seen the release of nicotine is at 30 minutes:

| Composition | release of nicotine |
|---|---|
| Nicotine chewing gum (2 mg nicotine): | 1.6 % |
| Tobacco chewing gum (1 mg nicotine): | 5.3 % |
| The composition according to the present invention (4.2 mg nicotine): | 32 % |
| Moist snuff in portion package (4.0 mg nicotine): | 41 % |

The result of this experiment shows that the nicotine release of the new product is comparable with a portion-packed oral moist snuff, while the release from the chewing gums is not.

Various embodiments of the present invention have been described above but a person skilled in the art realizes further minor alterations, which would fall into the scope of the present invention. The breadth and scope of the present invention should not be limited by any of the above-described exemplary embodiments, but should be defined only in accordance with the following claims and their equivalents. For example, any of the above-noted methods and products can be combined with other known methods and products. Other aspects, advantages and modifications within the scope of the invention will be apparent to those skilled in the art to which the invention pertains.

## Claims

1. A non-chewable tobacco composition, for use in the oral cavity, between the lip/cheek and gums, comprising tobacco and a carrier and wherein the composition is easily formable whereby it adjusts its form during use in the oral cavity, is easily colorable during manufacturing, retains essentially its original form and color after use in the oral cavity and has a relatively high nicotine release comparable with a portion pack of oral moist snuff, wherein the carrier is a gum base, preferably bubble gum base or a chewing gum base or a mixture thereof, most preferred a chewing gum base, wherein the tobacco composition comprises tobacco from 10 to 60% (w/w), chewing gum base from 20 to 60% (w/w) and a whitening agent from 0 to 60 % (w/w).

2. A tobacco composition according to claim 1 wherein the nicotine release during 30 minutes is at least approximately 10 % of the nicotine content.

3. A tobacco composition according to any one of the preceding claims wherein the nicotine release is controlled by varying the thickness of said composition from about 0.5 to about 8 mm, preferably from about 1 to about 4 mm, most preferred from about 1.5 to about 3 mm, and/or by imprinting a pattern.

4. A tobacco composition according to any one of the preceding claims wherein the nicotine release is enhanced by keeping the pH in said composition above about 6.5, preferably above pH 7.5.

5. A tobacco composition according to any one of the preceding claims comprising a whitening agent selected from the group consisting of TiO₂ and CaCO₃ or mixtures thereof, most preferred TiO₂.

6. A tobacco composition according to any one of the preceding claims wherein pH in said composition is adjusted by the use of a buffering agent selected from the group consisting of salts of carbonates and salts of phosphates or mixtures thereof, preferably Na₂CO₃ and Na₃PO₄ or mixtures thereof, most preferred said agent is Na₂CO₃.

7. A tobacco composition according to any one of the preceding claims comprising additionally a humectant, preferably glycerol or propylene glycol or mixtures thereof, most preferred glycerol.

8. A tobacco composition according to any one of the preceding claims wherein said tobacco is ground/cut raw tobacco, tobacco powder or moist snuff, or any combination thereof.

9. A tobacco composition according to any one of the preceding claims comprising additionally a solvent, wherein said solvent preferably is water.

10. A tobacco composition according to any one of the preceding claims comprising additionally a plasticizer and/or a lipophilic softener.

11. A tobacco composition according to any one of the preceding claims comprising additionally colors or flavors, or combinations thereof.

12. Method for the manufacturing of a tobacco composition according to any one of claims 1 to 11 comprising the following steps:
a) mixing tobacco, a buffering agent for the regulation of the pH in order to facilitate the nicotine uptake and optionally a whitening agent;
b) adding a humectant and, optionally, a solvent, and mixing with the mixture in step a) ;
c) adding the mixture obtained in b) to a preheated gum base;
d) mixing the dough thoroughly in warm conditions; and, optionally,
e) punching out the tobacco composition in a desired form

13. Method according to claim 12 wherein one or more sweeteners, colors, flavors, plasticizers or softeners are added in step a) and or in step b).

14. Method according to any one of claims 12 to 13 wherein said composition is pressed and folded repeatedly after step d), preferably more than 30 times to form a multi-layered tobacco composition.

15. Method according to claim 14 wherein a lubricant is distributed on the tobacco composition before each folding, preferably the tobacco composition is sprinkled with cornstarch before each folding.

16. Method according to any one of claims 12 - 15 wherein the tobacco composition is coated with a coating layer or is patterned.

17. Method according to any one of claims 12 - 16 wherein the tobacco composition subsequently in step e) is punched out in pieces for oral use, preferably in a form suitable for having said composition in the oral cavity between lip/cheek and gums, most preferred essentially elliptic pieces.

18. Method according to claim 17 wherein the out-punched tobacco composition is put on a solid carrier, preferably a strip of cloth, most preferred a cloth comprising heat-sealable non-woven, and optionally subsequently the cloth is sealed, preferably using heat.

19. Method according to claim 18 wherein a further solid carrier, preferably a strip of cloth, most preferred a cloth comprising heat-sealable non-woven, is added on the other opposite side of the out-punched tobacco composition, and optionally subsequently the solid carriers are sealed together, preferably using heat.

## Patentansprüche

1. Nichtkaubare Tabakzusammensetzung zur Verwendung in der Mundhöhle zwischen Lippe/Wange und Zahnfleisch, umfassend Tabak und einen Träger, wobei die Zusammensetzung leicht formbar ist, wodurch sie ihre Form während der Verwendung in der Mundhöhle anpasst, bei der Herstellung leicht färbbar ist, nach der Verwendung in der Mundhöhle ihre ursprüngliche Form und Farbe im Wesentlichen behält und eine vergleichsweise hohe Nikotinfreisetzung aufweist, vergleichbar mit einer Portionspackung von oralem feuchten Schnupftabak, wobei der Träger eine Gummigrundlage ist, vorzugsweise Bubblegum-Grundlage oder eine Kaugummigrundlage oder ein Gemisch davon, höchst bevorzugt eine Kaugummigrundlage, wobei die Tabakzusammensetzung 10 bis 60 % (Gew./Gew.) Tabak, 20 bis 60 % (Gew./Gew.) Kaugummigrundlage und 0 bis 60 % (Gew./Gew.) eines Weißtöners umfasst.

2. Tabakzusammensetzung gemäß Anspruch 1, wobei die Nikotinfreisetzung während 30 Minuten wenigstens etwa 10 % des Nikotingehalts beträgt.

3. Tabakzusammensetzung gemäß einem der vorstehenden Ansprüche, wobei die Nikotinfreisetzung durch Variieren der Dicke der Zusammensetzung von etwa 0,5 bis etwa 8 mm, vorzugsweise von etwa 1 bis etwa 4 mm, höchst bevorzugt von etwa 1,5 bis etwa 3 mm, und/oder durch Einprägen eines Musters kontrolliert wird.

4. Tabakzusammensetzung gemäß einem der vorstehenden Ansprüche, wobei die Nikotinfreisetzung durch Halten des pH-Werts der Zusammensetzung über etwa 6,5, vorzugsweise über pH 7,5, erhöht wird.

5. Tabakzusammensetzung gemäß einem der vorstehenden Ansprüche, umfassend einen Weißtöner, ausgewählt aus der Gruppe, bestehend aus TiO₂ und CaCO₃ oder Gemischen davon, höchst bevorzugt TiO₂.

6. Tabakzusammensetzung gemäß einem der vorstehenden Ansprüche, wobei der pH-Wert der Zusammensetzung durch die Verwendung eines Puffermittels, ausgewählt aus der Gruppe, bestehend aus Salzen von Carbonaten und Salzen von Phosphaten oder Gemischen davon, vorzugsweise Na₂CO₃ und Na₃PO₄ oder Gemische davon, reguliert wird, wobei das Mittel höchst bevorzugt Na₂CO₃ ist.

7. Tabakzusammensetzung gemäß einem der vorstehenden Ansprüche, zusätzlich umfassend ein Feuchthaltemittel, vorzugswese Glycerol oder Propylenglycol oder Gemische davon, höchst bevorzugt Glycerol.

8. Tabakzusammensetzung gemäß einem der vorstehenden Ansprüche, wobei der Tabak gemahlener/geschnittener Rohtabak, Tabakpulver oder feuchter Schnupftabak oder eine beliebige Kombination davon ist.

9. Tabakzusammensetzung gemäß einem der vorstehenden Ansprüche, zusätzlich umfassend ein Lösungsmittel, wobei das Lösungsmittel vorzugsweise Wasser ist.

10. Tabakzusammensetzung gemäß einem der vorstehenden Ansprüche, zusätzlich umfassend ein Plastiziermittel und/oder einen lipophilen Weichmacher.

11. Tabakzusammensetzung gemäß einem der vorstehenden Ansprüche, zusätzlich umfassend Farbstoffe oder Aromen oder Kombinationen davon.

12. Verfahren zum Herstellen einer Tabakzusammensetzung gemäß einem der Ansprüche 1 bis 11, umfassend folgende Schritte:
a) Mischen von Tabak, einem Puffermittel zur Regulierung des pH-Werts zum Erleichtern der Nikotinaufnahme und gegebenenfalls einem Weißtöner;
b) Zugeben eines Feuchthaltemittels und gegebenenfalls eines Lösungsmittels, und Mischen mit dem Gemisch aus Schritt a);
c) Zugeben des in b) erhaltenen Gemischs zu einer vorgewärmten Gummigrundlage;
d) gründliches Mischen des Teigs unter warmen Bedingungen; und gegebenenfalls
e) Ausstanzen der Tabakzusammensetzung zu einer gewünschten Form.

13. Verfahren gemäß Anspruch 12, wobei ein oder mehrere Süßstoffe, Farbstoffe, Aromen, Plastiziermittel oder Weichmacher bei Schritt a) oder bei Schritt b) zugegeben werden.

14. Verfahren gemäß einem der Ansprüche 12 bis 13, wobei die Zusammensetzung nach Schritt d) wiederholt gepresst und gefaltet wird, vorzugsweise öfter als 30-mal, um eine mehrschichtige Tabakzusammensetzung zu bilden.

15. Verfahren gemäß Anspruch 14, wobei vor jedem Falten ein Gleitmittel auf der Tabakzusammensetzung verteilt wird, vorzugsweise wird die Tabakzusammensetzung vor jedem Falten mit Maisstärke besprüht.

16. Verfahren gemäß einem der Ansprüche 12-15, wobei die Tabakzusammensetzung mit einem Beschichtungsüberzug überzogen oder gemustert wird.

17. Verfahren gemäß einem der Ansprüche 12-16, wobei von der Tabakzusammensetzung anschließend in Schritt e) Stücke zur oralen Verwendung ausgestanzt werden, vorzugsweise in einer Form, die dafür geeignet ist, die Zusammensetzung in der Mundhöhle zwischen Lippe/Wange und Zahnfleisch anzuordnen, höchst bevorzugt im Wesentlichen elliptische Stücke.

18. Verfahren gemäß Anspruch 17, wobei die ausgestanzte Tabakzusammensetzung auf einen festen Träger angeordnet wird, vorzugsweise einen Gewebestreifen, höchst bevorzugt ein Gewebe, das heißsiegelfähiges Vlies umfasst, und gegebenenfalls wird das Gewebe anschließend versiegelt, vorzugsweise unter Verwendung von Wärme.

19. Verfahren gemäß Anspruch 18, wobei ein weiterer fester Träger, vorzugsweise ein Gewebestreifen, höchst bevorzugt ein Gewebe, das heißsiegelfähiges Vlies umfasst, an der gegenüberliegenden Seite der ausgestanzten Tabakzusammensetzung angeordnet wird, und gegebenenfalls werden die festen Träger anschließend zusammengesiegelt, vorzugsweise unter Verwendung von Wärme.

## Revendications

1. Composition de tabac non mastiquable, destinée à être utilisée dans la cavité buccale, entre la lèvre/la joue et les gencives, comprenant du tabac et un support et la composition étant facile à mettre en forme, de sorte qu'elle ajuste sa forme pendant l'utilisation dans la cavité buccale, facile à colorer pendant la fabrication, conservant essentiellement sa forme et sa couleur initiales après utilisation dans la cavité buccale et ayant une libération de nicotine relativement élevée comparable à un paquet de portions de tabac humide à priser par voie orale, le support étant une base de gomme, de préférence une base de chewing-gum ou une base de gomme à mâcher ou un mélange de celles-ci, de façon tout à fait préférée une base de gomme à mâcher, la composition de tabac comprenant du tabac de 10 à 60 % (p/p), de la base de gomme à mâcher de 20 à 60 % (p/p) et un agent de blanchiment de 0 à 60 % (p/p).

2. Composition de tabac selon la revendication 1, **caractérisée en ce que** la libération de nicotine pendant 30 minutes est d'au moins environ 10 % de la teneur en nicotine.

3. Composition de tabac selon l'une quelconque des revendications précédentes, **caractérisée en ce que** la libération de nicotine est contrôlée en faisant varier l'épaisseur de ladite composition d'environ 0,5 à environ 8 mm, de préférence d'environ 1 à environ 4 mm, de façon tout à fait préférée d'environ 1,5 à environ 3 mm, et/ou en imprimant un motif.

4. Composition de tabac selon l'une quelconque des revendications précédentes, **caractérisée en ce que** la libération de nicotine est augmentée en maintenant le pH de ladite composition supérieur à environ 6,5, de préférence supérieur au pH 7,5.

5. Composition de tabac selon l'une quelconque des revendications précédentes, comprenant un agent de blanchiment choisi dans le groupe constitué de TiO₂ et de CaCO₃ ou des mélanges de ceux-ci, de façon tout à fait préférée de TiO₂.

6. Composition de tabac selon l'une quelconque des revendications précédentes, **caractérisée en ce que** le pH dans ladite composition est ajusté par l'utilisation d'un agent tampon choisi dans le groupe constitué de sels de carbonates et de sels de phosphates ou des mélanges de ceux-ci, de préférence de Na₂CO₃ et de Na₃PO₄ ou des mélanges de ceux-ci, de façon tout à fait préférée, ledit agent est le Na₂CO₃.

7. Composition de tabac selon l'une quelconque des revendications précédentes, comprenant en outre un humectant, de préférence le glycérol ou le propylèneglycol ou des mélanges de ceux-ci, de façon tout à fait préférée le glycérol.

8. Composition de tabac selon l'une quelconque des revendications précédentes, **caractérisée en ce que** ledit tabac est du tabac brut broyé/coupé, de la poudre de tabac ou du tabac humide à priser, ou toute combinaison de ceux-ci.

9. Composition de tabac selon l'une quelconque des revendications précédentes, comprenant en outre un solvant, ledit solvant étant de préférence l'eau.

10. Composition de tabac selon l'une quelconque des revendications précédentes, comprenant en outre un plastifiant et/ou un adoucissant lipophile.

11. Composition de tabac selon l'une quelconque des revendications précédentes, comprenant en outre des colorants et des arômes, ou des combinaisons de ceux-ci.

12. Méthode de fabrication d'une composition de tabac selon l'une quelconque des revendications 1 à 11, comprenant les étapes suivantes :
a) le mélange du tabac, d'un agent tampon pour la régulation du pH pour faciliter la reprise de nicotine et éventuellement d'un agent de blanchiment ;
b) l'addition d'un humectant et, éventuellement, d'un solvant, et le mélange avec le mélange dans l'étape a) ;
c) l'addition du mélange obtenu en b) à une base de gomme préchauffée ;
d) le mélange de la pâte abondamment dans des conditions tièdes ; et, éventuellement,
e) le découpage de la composition de tabac sous une forme désirée.

13. Méthode selon la revendication 12, **caractérisée en ce qu'**on ajoute dans l'étape a) et/ou dans l'étape b) un ou plusieurs édulcorants, colorants, arômes, plastifiants ou adoucissants.

14. Méthode selon l'une ou l'autre des revendications 12 et 13, **caractérisée en ce que** ladite composition est comprimée et pliée de façon répétée après l'étape d), de préférence plus de 30 fois, pour former une composition de tabac multicouche.

15. Méthode selon la revendication 14, **caractérisée en ce que** le lubrifiant est distribué sur la composition de tabac avant chaque plissement, de préférence la composition de tabac est saupoudrée d'amidon de maïs avant chaque plissement.

16. Méthode selon l'une quelconque des revendications 12 à 15, **caractérisée en ce que** la composition de tabac est revêtue d'une couche de revêtement ou est imprimée d'un motif.

17. Méthode selon l'une quelconque des revendications 12 à 16, **caractérisée en ce que** la composition de tabac ensuite dans l'étape e) est découpée en morceaux pour une utilisation par voie orale, de préférence sous une forme convenable pour avoir ladite composition dans la cavité buccale entre la lèvre/la joue et les gencives, de façon tout à fait préférée essentiellement en morceaux elliptiques.

18. Méthode selon la revendication 17, **caractérisée en ce que** la composition de tabac découpée est mise sur un support solide, de préférence une bande de tissu, de façon tout à fait préférée un tissu comprenant un non tissé thermosoudable, et éventuellement ensuite le tissu est soudé, de préférence par la chaleur.

19. Méthode selon la revendication 18, **caractérisée en ce qu'**un autre support solide, de préférence une bande de tissu, de façon tout à fait préférée un tissu comprenant un non tissé thermosoudable, est ajouté sur l'autre côté opposé de la composition de tabac découpée, et éventuellement ensuite les supports solides sont soudés ensemble, de préférence par la chaleur.
